# DEMANDE DE BREVET EUROPEEN

(11) **EP 2 131 526 A1**
(43) Date de publication de la demande: **09.12.2009**
(21) Numéro de dépôt: 09161677.1
(22) Date de dépôt: 02.06.2009
(51) Int. Cl.: H04L 9/32

(54) **Procédé et dispositif de connexion pour entité électronique portable**

(30) Priorité: 06.06.2008 FR 0853796
(71) Demandeur: OBERTHUR TECHNOLOGIES, 92300 Levallois-Perret (FR)
(72) Inventeur: Chamley, Olivier, 33850, Leognan (FR); Jayet, Stéphane, 69330, Meyzieu (FR); Leduc, Olivier, 69800 Saint-Priest (FR)
(74) Mandataire: Imbert de Tremiolles, Ghislain

(57) **Abrégé**

L'invention a pour objet un procédé et un dispositif adaptés à connecter une entité électronique portable à une station hôte, l'entité électronique portable pouvant être identifiée selon au moins deux configurations distinctes. Lors de sa connexion, l'entité électronique portable est identifiée selon une première configuration (310). Après authentification de l'utilisateur, une étape de ré-énumération est avantageusement effectuée pour permettre à l'entité électronique portable d'être identifiée selon une seconde configuration (315). Ainsi, si la seconde configuration correspond à un périphérique de type mémoire, la mémoire n'est reconnue qu'après authentification de l'utilisateur.

## Description

La présente invention concerne les périphériques pour unités de traitement tels que les clés USB, les cartes de type MMC ou SD et les lecteurs de telles cartes et plus particulièrement un procédé et un dispositif permettant d'accéder un tel périphérique de façon conditionnelle.

Il existe de nombreux périphériques, couramment utilisés, tels que les clés USB (sigle de *Universal Serial Bus* en terminologie anglo-saxonne), les cartes de type MMC (sigle de *Multimedia Memory Card* en terminologie anglo-saxonne) et SD (sigle de *Secure Digital* en terminologie anglo-saxonne) et les lecteurs de telles cartes, permettant d'ajouter des fonctionnalités à une unité de traitement, par exemple des fonctionnalités de stockage.

Les unités de traitement, aussi appelées stations hôtes, adaptées à coopérer avec de tels périphériques, sont notamment les ordinateurs, les téléphones mobiles et les assistants personnels aussi appelés PDA (sigle de *Personal Digital Assistant* en terminologie anglo-saxonne). Les connexions entre ces unités de traitement et les périphériques sont réalisées de façon classique, notamment à l'aide d'une interface physique et d'une liaison électrique, ou selon une technologie sans fil, par exemple selon le standard appelées *wireless USB* en terminologie anglo-saxonne.

En général, de tels périphériques peuvent être connectés et déconnectés sans arrêter l'unité de traitement à laquelle ils sont reliés ou doivent être reliés, l'unité de traitement mettant en oeuvre une gestion dynamique des connexions et des déconnexions des périphériques. Par exemple, selon le protocole USB, un processus d'énumération permet à l'unité de traitement d'identifier et de configurer le périphérique, à l'aide de descripteurs transmis par celui-ci, en lui donnant une adresse unique. Cette phase d'énumération, transparente pour l'utilisateur, est mise en oeuvre lors de chaque connexion de périphérique.

Par ailleurs, il existe des périphériques mettant en oeuvre des dispositifs pour sécuriser l'accès aux fonctions des périphériques ou aux données mémorisées dans ces derniers.

Il existe ainsi des systèmes USB comprenant plusieurs sous-interfaces, notamment de type stockage et de type interface utilisateur. De tels systèmes sont adaptés à mettre en oeuvre des fonctions de sécurité de telle sorte que les zones de stockage ne sont effectivement accessibles qu'après authentification de l'utilisateur.

Cependant, que l'utilisateur soit authentifié ou non, la sous-interface de type stockage est identifiée durant l'énumération. Par conséquent, une référence à l'unité de stockage correspondant à cette sous-interface est créée par le système d'exploitation de l'unité de traitement alors que cette unité de stockage n'est pas nécessairement accessible.

Par exemple, la connexion d'une clé USB comprenant une mémoire de masse et un tel système d'authentification à un ordinateur utilisant le système d'exploitation Microsoft Windows (Windows est une marque), fait apparaître une représentation de cette mémoire de masse dans l'arborescence de fichiers et de répertoires de l'utilisateur, avant même que son utilisation soit autorisée.

L'invention permet de résoudre au moins un des problèmes exposés précédemment.

L'invention a ainsi pour objet un procédé pour entité électronique portable adapté à établir une connexion entre ladite entité électronique portable et une station hôte, ladite entité électronique portable pouvant être identifiée selon au moins deux configurations distinctes, ce procédé comprenant les étapes suivantes,
- réception d'au moins une donnée d'authentification ;
- authentification de ladite au moins une donnée reçue ; et,
- en réponse à une requête d'identification de ladite entité électronique portable, transmission d'une indication d'identification de ladite entité électronique portable selon l'une desdites au moins deux configurations si ladite au moins une donnée reçue est authentifiée sinon, transmission d'une indication d'identification de ladite entité électronique portable selon l'autre desdites au moins deux configurations.

Le procédé selon l'invention permet ainsi de masquer certaines fonctionnalités de ladite entité électronique portable, par exemple une zone de stockage, si l'utilisateur n'est pas authentifié.

Selon un mode de réalisation particulier, ladite étape d'authentification comprend une étape de comparaison de ladite au moins une donnée reçue avec au moins une donnée préalablement mémorisée.

De façon avantageuse, le procédé comprend en outre une étape de transmission à ladite station hôte d'un module de contrôle d'accès, ledit module de contrôle d'accès étant adapté à recevoir et à transmettre ladite au moins une donnée d'authentification.

Le procédé selon l'invention est ainsi adapté à être mis en oeuvre à partir d'une station hôte sans nécessiter l'installation préalable de module particulier.

Selon un mode de réalisation particulier, ledit module de contrôle d'accès est auto-exécutable. L'utilisateur n'a donc pas de manipulation fastidieuse à effectuer.

Toujours selon un mode de réalisation particulier, ladite une desdites au moins deux configurations est relative à au moins une entité électronique portable de type mémoire. La zone mémoire n'est visible que si l'utilisateur a été authentifié.

Toujours selon un mode de réalisation particulier, ladite autre desdites au moins deux configurations est relative à au moins une entité électronique comprenant des moyens adaptés à authentifier un utilisateur.

Toujours selon un mode de réalisation particulier, le procédé comprend en outre une étape de transmission d'une requête de type ré-énumération permettant d'accéder à certaines fonctionnalités de ladite entité électronique portable.

Toujours selon un mode de réalisation particulier, le procédé comprend en outre les étapes suivantes,
- détermination d'un état d'au moins un indicateur de blocage de ladite entité électronique portable ; et,
- en réponse à ladite étape d'authentification, modification dudit état dudit indicateur de blocage de ladite entité électronique portable si ladite au moins une donnée reçue est authentifiée.

De façon avantageuse, la transmission d'une indication d'identification de ladite entité électronique portable selon l'une desdites au moins deux configurations ou la transmission d'une indication d'identification de ladite entité électronique portable selon l'autre desdites au moins deux configurations en réponse à une commande d'identification est déterminée en fonction dudit état dudit indicateur de blocage de ladite entité électronique portable.

Selon un mode de réalisation particulier, le procédé comprend en outre une étape de déchiffrement d'au moins une donnée transmise à ladite station hôte ou une étape de chiffrement d'au moins une données reçue de ladite station hôte permettant de chiffrer des données mémorisées, les données chiffrées pouvant être représentées sous forme de volume lorsque l'utilisateur est authentifié.

Toujours selon un mode de réalisation particulier, ladite entité électronique portable est du type clé USB, carte mémoire ou lecteur de carte mémoire.

L'invention a également pour objet un programme d'ordinateur comprenant des instructions adaptées à la mise en oeuvre de chacune des étapes du procédé décrit précédemment.

L'invention a aussi pour objet un dispositif pour entité électronique portable, ladite entité électronique portable étant adaptée à être connectée à une station hôte, ladite entité électronique portable pouvant être identifiée selon au moins deux configurations distinctes, ce dispositif comprenant les moyens suivants,
- moyens de réception d'au moins une donnée d'authentification ;
- moyens d'authentification d'au moins une données reçue ;
- moyens de détermination d'une configuration parmi lesdites au moins deux configurations selon le résultat desdits moyens d'authentification ; et,
- moyens d'identification adaptés à transmettre au moins un paramètre d'identification d'une configuration déterminée par lesdits moyens de détermination d'une configuration.

Le dispositif selon l'invention permet ainsi de masquer certaines fonctionnalités de ladite entité électronique portable, par exemple une zone de stockage, si l'utilisateur n'est pas authentifié.

Selon un mode de réalisation particulier, ladite une desdites au moins deux configurations est relative à au moins une entité électronique portable de type mémoire. La zone mémoire n'est visible que si l'utilisateur est authentifié.

Toujours selon un mode de réalisation particulier, le dispositif comprend en outre des moyens de transmission d'une requête de type ré-énumération permettant d'accéder à certaines fonctionnalités de ladite entité électronique portable.

Toujours selon un mode de réalisation particulier, lesdits moyens d'authentification sont des moyens cryptographiques.

Selon un mode de réalisation particulier, le dispositif comprend en outre des moyens de mémorisation de type volatile adaptés à mémoriser un état d'au moins un indicateur de blocage dont la valeur est modifiée selon le résultat desdits moyens d'authentification, ledit état dudit au moins un indicateur de blocage étant utilisé par lesdits moyens de détermination d'une configuration.

Toujours selon un mode de réalisation particulier, le dispositif comprend en outre des moyens de mémorisation de type non volatile adaptés à mémoriser un module de contrôle d'accès et des moyens de transmission à ladite station hôte dudit module de contrôle d'accès.

Le dispositif selon l'invention est ainsi adapté à être connecté à une station hôte sans nécessiter l'installation préalable de module particulier.

Toujours selon un mode de réalisation particulier, le dispositif comprend en outre une mémoire de masse.

D'autres avantages, buts et caractéristiques de la présente invention ressortent de la description détaillée qui suit, faite à titre d'exemple non limitatif, au regard des dessins annexés dans lesquels :
- la figure 1 représente un exemple d'architecture d'une entité électronique portable selon l'invention ;
- la figure 2 illustre un ordinateur auquel peut être connectée l'entité électronique portable représentée sur la figure précédente ;
- la figure 3 illustre schématiquement un exemple d'algorithme mis en oeuvre dans le périphérique conforme à l'invention lors de la phase d'énumération, avant que le périphérique ne fournisse à la station hôte une suite de descripteurs permettant son identification et que la station hôte n'assigne une adresse au périphérique et le configure ;
- la figure 4 illustre un exemple d'algorithme pouvant être exécuté par la station hôte après la phase d'énumération suivant la connexion d'un périphérique conforme à l'invention à celui-ci ;
- la figure 5 illustre un exemple d'algorithme pouvant être exécuté par un périphérique conforme à l'invention après avoir reçu des données d'authentification, après la phase d'énumération suivant la connexion du périphérique à la station hôte ; et,
- la figure 6 illustre un exemple d'architecture de station hôte adaptée à mettre en oeuvre l'invention.

De façon générale, l'invention concerne une entité électronique portable ou de poche pouvant être connectée à l'aide d'une interface physique ou sans fil à une station hôte telle qu'un ordinateur de type PC (sigle de *Personal Computer* en terminologie anglo-saxonne) ou un téléphone mobile, comprenant une mémoire de masse ou apte à être connectée à une mémoire de masse, au moins une partie de la mémoire de masse n'étant visible sur la station hôte qu'après authentification.

L'entité électronique portable ou de poche peut être notamment une carte de type MMC ou SD, un lecteur USB d'une telle carte ou une clef USB. L'entité électronique portable comporte, de préférence, un composant sécurisé, c'est-à-dire un composant comportant des moyens de calcul cryptographique et des moyens de mémorisation adaptés à stocker une clé sécrète ou des moyens offrant une protection contre des attaques visant à obtenir les informations secrètes, par exemple la clé, mémorisées dans l'entité électronique portable.

L'entité électronique portable dispose ici d'une mémoire de masse, formée par une mémoire flash, un disque dur, un lecteur de CD ou tout autre composant connu de l'homme de métier ou d'une interface vers une telle mémoire. La quantité de mémoire est, de préférence, supérieure à 10 méga-octets.

Selon un premier mode de réalisation, l'entité électronique portable est apte à réaliser une ré-énumération du type de celle réalisée selon la norme USB.

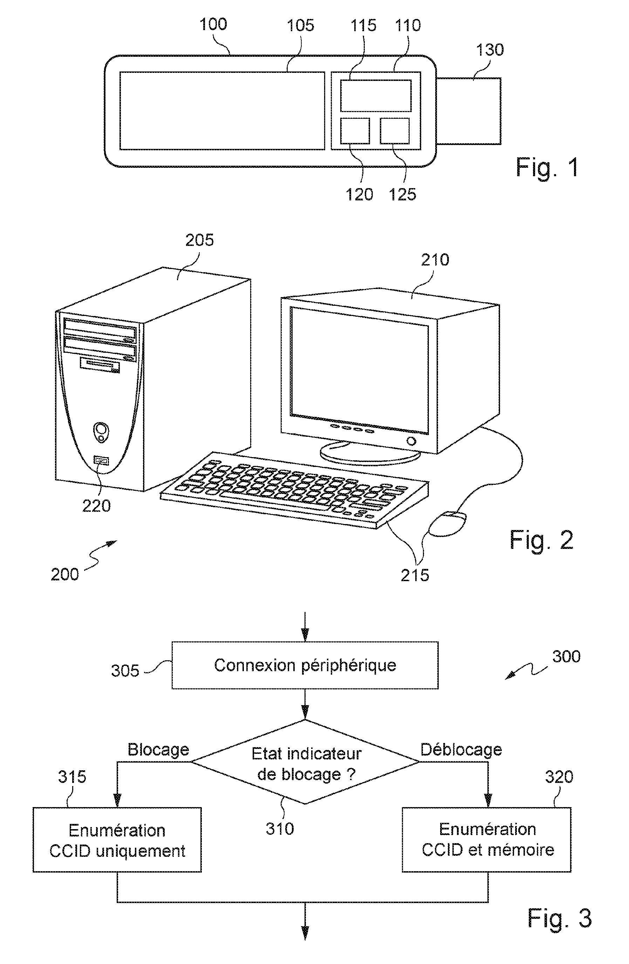

La figure 1 illustre un exemple d'une entité électronique portable selon l'invention, ici une clé USB comprenant une mémoire de masse à accès sécurisé.

Comme illustré, la clé USB 100 comprend une mémoire 105, par exemple une mémoire flash, et un microcontrôleur 110, de préférence sécurisé, permettant à la clé USB 100 d'être identifiée comme un périphérique de classe CCID (sigle de *Chip*/*Smart Card Interface Devices* en terminologie anglo-saxonne), c'est-à-dire comme un lecteur de carte à puce générique auquel est connecté ou non une carte, et comme un périphérique de classe mémoire, ou MSC (sigle de *Mass Storage Class* en terminologie anglo-saxonne), de type mémoire de masse, lecteur de CD-ROM (acronyme de *Compact Disc Read Only Memory* en terminologie anglo-saxonne) ou similaire, conformément au standard USB. Un périphérique de classe CCID comprend des moyens permettant, en particulier, d'authentifier un utilisateur.

Le microcontrôleur 110 comprend lui-même une mémoire morte 115 (ROM, acronyme de *Read Only Memory* en terminologie anglo-saxonne ou EEPROM, acronyme d'*Electrically-Erasable Programmable Read-Only Memory* en terminologie anglo-saxonne), effaçable ou non, une mémoire vive ou mémoire cache 120 (RAM, acronyme de *Random Access Memory* en terminologie anglo-saxonne) et une unité de calcul 125 (CPU, sigle de *Central Processing Unit* en terminologie anglo-saxonne).

La mémoire morte 115 est adaptée à mémoriser une clé secrète ou un mot de passe tel qu'un code PIN (acronyme de *Personal Identification Number* en terminologie anglo-saxonne) et un programme de contrôle d'accès à la mémoire 105.

Le programme de contrôle d'accès à la mémoire 105 comprend avantageusement une première partie pouvant être exécutée par le microcontrôleur 110 et une seconde partie pouvant être transmise à la station hôte à laquelle est connectée la clé USB 100 pour y être exécutée.

La mémoire vive ou mémoire cache 120 est adaptée à mémoriser un indicateur de blocage pouvant prendre, de préférence, deux états distincts. Un premier état, dit de blocage, interdit l'accès à la mémoire 105, ou à une partie de celle-ci, tandis qu'un second état, dit de déblocage, permet l'accès à la mémoire 105.

De façon avantageuse, l'indicateur de blocage est dans l'état de blocage à la mise sous tension, c'est-à-dire, en particulier, à la connexion de la clé USB 100.

La mémoire 105 peut être considéré comme une ou plusieurs partition, c'est-à-dire, selon la définition communément admise, comme une mémoire comprenant un système de gestion de fichiers. Le système d'exploitation Windows permet d'identifier et d'accéder chaque partition à l'aide d'une lettre.

Selon un mode de réalisation particulier, la mémoire 105 forme une seule partition à accès sécurisé. L'accès à la partition n'est autorisé qu'après authentification de l'utilisateur. Alternativement, la mémoire 105 peut comprendre plusieurs partitions, certaines partitions étant à accès sécurisé et d'autres non.

Ainsi, le microcontrôleur 110 et le programme contenu dans la mémoire morte 115 gèrent, selon l'état de l'indicateur de blocage mémorisé dans la mémoire vive 120, l'accès à au moins une partition de la mémoire 105.

La clé USB 100 comprend également une interface 130, ici une interface conforme au standard USB, permettant de connecter celle-ci à une unité de traitement telle qu'un ordinateur. Alternativement, l'interface 130 peut être remplacée par une interface de communication sans fil. L'interface 130 peut également consister en une double interface permettant une connexion classique ou une connexion sans fil selon sa configuration.

La clé USB 100 peut également comprendre un indicateur visuel d'état, par exemple sous forme de LED (acronyme de *Light-Emitting Diode* en terminologie anglo-saxonne) pour indiquer sa configuration (bloquée ou débloquée).

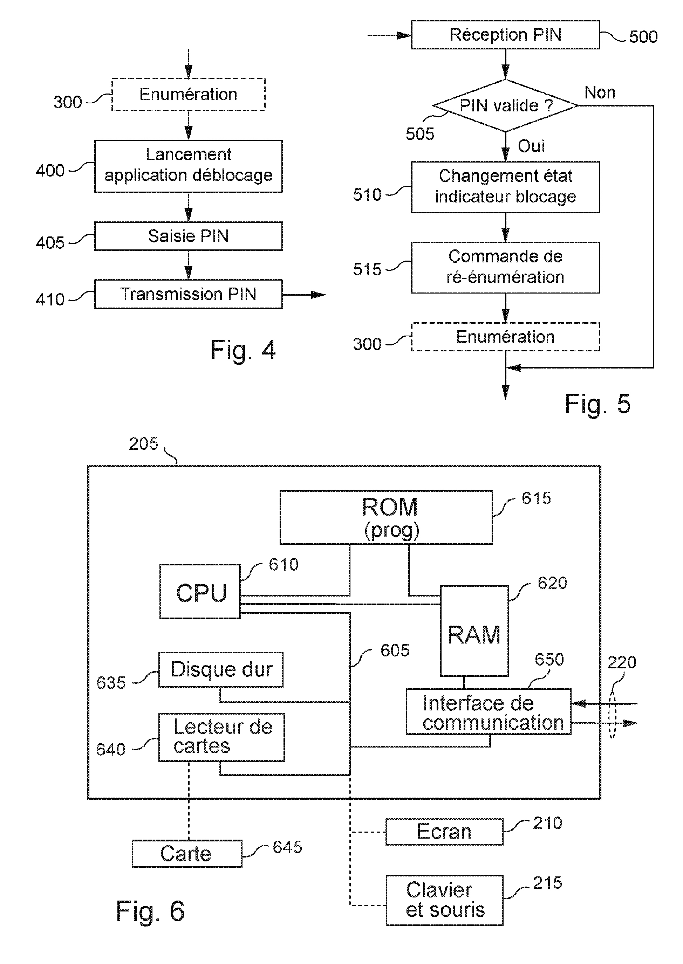

La figure 2 illustre un ordinateur 200 auquel peut être connectée la clé USB 100 illustré sur la figure 1. L'ordinateur 200 comprend ici une unité centrale 205 dont un exemple d'architecture est illustré sur la figure 6, un écran 210, un clavier et un dispositif de pointage 215. L'unité centrale 205 comprend une interface de communication 220, ici un connecteur USB, adaptée à recevoir la clé USB 100.

L'unité centrale 205 comprend un module logiciel de communication de données pour recevoir et transmettre des données via l'interface de communication 200, de préférence conforme au standard CCID.

L'unité centrale 205 est en outre adaptée à exécuter un logiciel de contrôle permettant notamment de recevoir, via une autre application ou via des moyens de saisie, et de transmettre, via l'interface de communication 220, des données d'authentification telles qu'une signature ou un mot de passe.

Selon un mode de réalisation particulier, le logiciel de contrôle exécuté par l'unité centrale 205 est reçu de la clé USB 100 lorsque celle-ci est connectée.

La figure 3 illustre schématiquement un exemple d'algorithme mis en oeuvre dans le périphérique conforme à l'invention, par exemple dans la clé USB 100, lors de la phase d'énumération, avant que le périphérique ne fournisse à la station hôte une suite de descripteurs permettant son identification et que la station hôte n'assigne une adresse au périphérique et le configure. L'énumération est ici une énumération conforme au standard USB ou similaire à celui-ci.

Une première étape de l'algorithme 300 permet de détecter la connexion du périphérique (étape 305) à l'aide, par exemple, de l'alimentation électrique. Un test est ensuite réalisé (étape 310) pour déterminer l'état de l'indicateur de blocage.

Si l'indicateur de blocage est dans l'état de blocage, les descripteurs transmis par le microcontrôleur du périphérique ne visent qu'un périphérique du type CCID (étape 315). Ainsi, selon cette énumération le périphérique connecté est reconnu comme un simple périphérique de type CCID et non comme un périphérique comprenant une mémoire de masse. En d'autres termes, l'énumération du périphérique de type mémoire est inhibée.

Au contraire, si l'indicateur de blocage est dans l'état de déblocage, les descripteurs transmis par le microcontrôleur du périphérique visent un périphérique du type CCID et un périphérique de type mémoire (étape 320). Selon cette énumération, le périphérique connecté est reconnu comme un périphérique de type CCID et de type mémoire. Par conséquent, ce périphérique est visible en tant que mémoire et peut être utilisé comme toute autre partition de la station hôte.

La figure 4 illustre un exemple d'algorithme pouvant être exécuté par la station hôte après la phase d'énumération suivant la connexion d'un périphérique conforme à l'invention à celui-ci.

L'application correspondant à cet algorithme est de préférence mémorisée dans la mémoire morte 115 du périphérique. Après transmission de celle-ci du périphérique à la station hôte, elle est exécutée selon une commande d'exécution automatique, appelée *autorun* en terminologie anglo-saxonne. L'exécution automatique peut être implémentée, par exemple, en créant une sous-interface de type lecteur de CD-ROM, liée au périphérique de type CCID.

Alternativement, cette application peut être présente dans la station hôte et exécutée par l'utilisateur.

Après une phase d'énumération (étape 300) telle que celle décrite en référence à la figure 3, suivant, par exemple, la connexion du périphérique, l'application de contrôle d'accès est lancée sur la station hôte (étape 400).

L'utilisateur est ensuite invité à s'authentifier (étape 405) en saisissant, par exemple, un code PIN à l'aide des moyens d'entrées/sorties de la station hôte tels qu'un clavier. Alternativement, d'autres types de données peuvent être utilisés pour authentifier l'utilisateur. A titre d'illustration, ces données peuvent être des données biométriques telles qu'une empreinte digitale ou une photo d'identité (ces données peuvent être acquises via un capteur correspondant) ou des données cryptographiques telles qu'une signature pouvant être mémorisée dans une carte à microcircuit accessible à la station hôte.

Ces données d'authentification sont alors transmises au périphérique (étape 410) à travers l'interface de communication reliant la station hôte au périphérique. De façon avantageuse, les données d'authentification sont transmises au périphérique selon le protocole USB ou un protocole similaire, sous forme de paquets de données, appelés APDU (sigle de *Application Protocol Data Unit* en terminologie anglo-saxonne).

Ainsi, de façon générale, l'application de contrôle d'accès lancée sur la station hôte permet de saisir ou de recevoir des données d'authentification de l'utilisateur, ces données étant ensuite transmises au périphérique.

L'application de contrôle d'accès est de préférence une application comprenant une interface graphique du type de celles mises en oeuvre par le système d'exploitation de la station hôte.

La figure 5 illustre un exemple d'algorithme pouvant être exécuté par un périphérique conforme à l'invention après avoir reçu des données d'authentification, après la phase d'énumération suivant la connexion du périphérique à la station hôte.

Après avoir reçu les données d'authentification (étape 500), par exemple un code PIN, un test est effectué pour authentifier l'utilisateur à travers ces données (étape 505).

La nature de ce test dépend de la nature des données d'authentification reçues. Si les données reçues sont un mot de passe, un code PIN ou des données biométriques, par exemple des données représentatives d'une empreinte digitale ou d'une photo d'identité, ce test peut consister à comparer les données reçues avec des données préalablement mémorisées, par exemple dans une mémoire morte du périphérique. L'utilisateur est alors authentifié si les données sont similaires. Si les données reçues sont des données cryptographiques, un calcul est effectué pour comparer la signature portée par ces données et la signature engendrée à partir d'une clé secrète préalablement enregistrée et mémorisée, par exemple, dans une mémoire morte du périphérique.

Si l'utilisateur est authentifié, l'état de l'indicateur de blocage est modifié et prend la valeur correspondant à l'état de déblocage (étape 510). Une commande de ré-énumération est alors générée et transmise à la station hôte (étape 515) afin de provoquer une nouvelle phase d'énumération (étape 300) telle que celle décrite en référence à la figure 3.

Selon un mode de réalisation particulier, la commande de ré-énumération est transmise, sous forme d'acquittement, à l'application de contrôle d'accès de la station hôte qui transmet elle-même un ordre d'énumération au système d'exploitation (ou au module correspondant lié à celui-ci).

La valeur de l'indicateur de blocage étant modifiée, le périphérique est identifié comme un périphérique de type CCID et de type mémoire (étape 320) durant la nouvelle énumération.

Si l'utilisateur n'est pas authentifié, l'état de l'indicateur de blocage n'est pas modifié et le périphérique reste identifié auprès de la station hôte comme un périphérique de type CCID. En d'autres termes, l'énumération du périphérique de type mémoire reste inhibée.

Ainsi, le volume, c'est-à-dire la représentation d'une partition ou d'une unité logique de données, correspondant à la mémoire de masse n'apparaît sur l'écran de la station hôte qu'après authentification de l'utilisateur.

Selon un autre mode de réalisation, la mémoire de masse comprend un ou plusieurs ensembles de données protégées qui ne sont visibles qu'après authentification de l'utilisateur, indépendamment de l'énumération ou de la ré-énumération du périphérique. Ces ensembles de données sont identifiés sous forme d'un ou de plusieurs volumes indépendants sur la station hôte.

Ainsi, la mémoire de masse du périphérique peut être reconnue comme un premier volume lors de la connexion du périphérique, ce volume pouvant comprendre des données protégées et des données non protégées, chaque ensemble de données protégées étant représenté, après authentification, comme un volume indépendant.

A titre d'illustration, chaque ensemble de données protégées peut être mémorisé dans la mémoire de masse du périphérique sous la forme d'un fichier chiffré. Le volume correspondant n'apparaît que si le fichier peut être déchiffré selon les informations d'authentification de l'utilisateur.

Une demande d'authentification de l'utilisateur peut être effectuée automatiquement dès que le périphérique est connecté, comme indiqué précédemment, ou sur requête de l'utilisateur, en lançant un module logiciel d'authentification sur la station hôte. Les données d'authentification sont transmises au périphérique qui authentifie ou non l'utilisateur.

Si l'utilisateur est authentifié, les ensembles de données protégées sont rendus visibles, sous forme de volumes, sur la station hôte. Plusieurs ensembles de données peuvent correspondre à plusieurs utilisateurs différents. Dans ce cas, seuls les ensembles de données protégées correspondant à l'utilisateur authentifié sont rendus visibles.

Selon un mode de réalisation particulier, la mémoire de masse ou une partie de celle-ci, destinée à recevoir les données protégées, est masquée par le contrôleur mémoire. Les données mémorisées à cet emplacement mémoire, de préférence chiffrées, ne sont donc pas visibles, bien qu'accessibles. Après authentification de l'utilisateur, les données sont déchiffrées, si nécessaire, et recopiées dans un volume virtuel de la station hôte en utilisant, par exemple, un disque dur ou la mémoire vive de la station hôte. Elles apparaissent alors comme des éléments d'une partition standard.

De façon avantageuse, lorsque les données mémorisées dans un volume virtuel sont modifiées, supprimées ou que de nouvelles données y sont mémorisées, la modification correspondante est automatiquement effectuée dans la mémoire de masse du périphérique. Cette opération peut être réalisée par un module logiciel pouvant être mémorisé dans la mémoire morte du périphérique et transmis à la station hôte lors de la connexion de celui-ci.

Alternativement, le masquage des ensembles de données à protéger peut être réalisé dynamiquement par le contrôleur mémoire du périphérique ou par la station hôte à l'aide d'un module logiciel pouvant être mémorisé dans la mémoire morte du périphérique et transmis à la station hôte lors de la connexion de celui-ci.

Ainsi, selon une première configuration, seules les données non protégées sont visibles et accessibles sous forme d'un ou de plusieurs volumes et, selon une seconde configuration, des ensembles de données protégées sont visibles et accessibles sous forme de volumes indépendants.

Il convient de remarquer ici que les modes de réalisation décrits peuvent être combinés pour, par exemple, permettre à un groupe l'accès à la mémoire de masse du périphérique à un ensemble d'utilisateur partageant un même premier code d'authentification et ayant chacun un ou plusieurs second codes d'authentification pour accéder à des volumes mémorisés sous forme de fichiers chiffrés.

Une unité centrale 205 adaptée à mettre en oeuvre l'invention est illustrée sur la figure 6. Comme indiqué précédemment, l'unité centrale 205 est par exemple un micro-ordinateur, un téléphone mobile ou un assistant personnel.

L'unité centrale 205 comporte ici un bus de communication 605 auquel sont reliés :
- une unité de traitement ou microprocesseur 610 (CPU) ;
- une mémoire morte 615 (ROM) pouvant comporter le programme "Prog" de contrôle d'accès ainsi que les modules logiciels nécessaires à la transmission de données entre l'unité centrale 205 et un périphérique connecté à elle ;
- une mémoire vive ou mémoire cache 620 (RAM) comportant des registres adaptés à enregistrer des variables et paramètres créés et modifiés au cours de l'exécution des programmes précités ; et,
- une interface de communication 650 adaptée à transmettre et à recevoir des données, en particulier à transmettre et à recevoir des données à un périphérique connecté à l'interface 220.

L'unité centrale 205 peut également disposer :
- d'un écran 210 permettant de visualiser des données et/ou de servir d'interface graphique avec l'utilisateur qui pourra interagir avec les programmes selon l'invention, à l'aide d'un clavier et d'une souris 215 ou d'un autre dispositif de saisie et de pointage ;
- d'un disque dur 635 pouvant comporter le programme "prog" et les modules logiciels de transmission de données précités et des données traitées ou à traiter ; et,
- d'un lecteur de cartes 640 adapté à recevoir une carte 645, par exemple une carte à microcircuit comprenant des données cryptographiques d'authentification.

Le bus de communication permet la communication et l'interopérabilité entre les différents éléments inclus dans l'unité centrale 205 ou reliés à elle. La représentation du bus n'est pas limitative et, notamment, l'unité centrale est susceptible de communiquer des instructions à tout élément de l'unité centrale 205 directement ou par l'intermédiaire d'un autre élément de celle-ci.

Le code exécutable des programmes permettant à l'unité centrale 205 de mettre en oeuvre les processus selon l'invention, peut être stocké, par exemple, dans le disque dur 635 ou en mémoire morte 615.

Selon une variante, le code exécutable des programmes, en particulier du programme de contrôle d'accès, peut être reçu, au moins partiellement, par l'intermédiaire de l'interface 650, pour être stocké de façon identique à celle décrite précédemment.

L'unité centrale de traitement 610 commande et dirige l'exécution des instructions ou portions de code logiciel du ou des programmes.

Il convient de noter que les éléments de l'unité centrale 205 nécessaires à la mise en oeuvre de l'invention peuvent également être arrangés sous la forme d'un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente.

## Revendications

1. Procédé pour entité électronique portable (100) adapté à établir une connexion entre ladite entité électronique portable et une station hôte (200), ladite entité électronique portable pouvant être identifiée selon au moins deux configurations distinctes, ce procédé étant **caractérisé en ce qu'**il comprend les étapes suivantes,
- réception (500) d'au moins une donnée d'authentification ;
- authentification (505) de ladite au moins une donnée reçue ; et,
- en réponse à une requête d'identification de ladite entité électronique portable, transmission d'une indication d'identification de ladite entité électronique portable selon l'une desdites au moins deux configurations (315) si ladite au moins une donnée reçue est authentifiée sinon, transmission d'une indication d'identification de ladite entité électronique portable selon l'autre desdites au moins deux configurations (310).

2. Procédé selon la revendication 1 selon lequel ladite étape d'authentification comprend une étape de comparaison de ladite au moins une donnée reçue avec au moins une donnée préalablement mémorisée.

3. Procédé selon la revendication 1 ou la revendication 2 comprenant en outre une étape de transmission à ladite station hôte d'un module de contrôle d'accès, ledit module de contrôle d'accès étant adapté à recevoir et à transmettre ladite au moins une donnée d'authentification.

4. Procédé selon la revendication précédente selon lequel ledit module de contrôle d'accès est auto-exécutable.

5. Procédé selon l'une quelconque des revendications précédentes selon lequel ladite une desdites au moins deux configurations est relative à au moins une entité électronique portable de type mémoire.

6. Procédé selon l'une quelconque des revendications précédentes selon lequel ladite autre desdites au moins deux configurations est relative à au moins une entité électronique comprenant des moyens adaptés à authentifier un utilisateur.

7. Procédé selon l'une quelconque des revendications précédentes comprenant en outre une étape de transmission (515) d'une requête de type ré-énumération.

8. Procédé selon l'une quelconque des revendications précédentes comprenant en outre les étapes suivantes,
- détermination (310) d'un état d'au moins un indicateur de blocage de ladite entité électronique portable ; et,
- en réponse à ladite étape d'authentification, modification (510) dudit état dudit indicateur de blocage de ladite entité électronique portable si ladite au moins une donnée reçue est authentifiée.

9. Procédé selon la revendication 8 selon lequel la transmission d'une indication d'identification de ladite entité électronique portable selon l'une desdites au moins deux configurations (315) ou la transmission d'une indication d'identification de ladite entité électronique portable selon l'autre desdites au moins deux configurations (310) en réponse à une commande d'identification est déterminée en fonction dudit état dudit indicateur de blocage de ladite entité électronique portable.

10. Procédé selon l'une quelconque des revendications précédentes comprenant en outre une étape de déchiffrement d'au moins une donnée transmise à ladite station hôte ou une étape de chiffrement d'au moins une données reçue de ladite station hôte.

11. Procédé selon l'une quelconque des revendications précédentes selon lequel ladite entité électronique portable est du type clé USB, carte mémoire ou lecteur de carte mémoire.

12. Programme d'ordinateur comprenant des instructions adaptées à la mise en oeuvre de chacune des étapes du procédé selon l'une quelconque des revendications précédentes.

13. Dispositif (110) pour entité électronique portable (100), ladite entité électronique portable étant adaptée à être connectée à une station hôte (200), ladite entité électronique portable pouvant être identifiée selon au moins deux configurations distinctes, ce dispositif étant **caractérisé en ce qu'**il comprend les moyens suivants,
- moyens de réception d'au moins une donnée d'authentification ;
- moyens d'authentification d'au moins une données reçue ;
- moyens de détermination d'une configuration parmi lesdites au moins deux configurations selon le résultat desdits moyens d'authentification ; et,
- moyens d'identification (125) adaptés à transmettre au moins un paramètre d'identification d'une configuration déterminée par lesdits moyens de détermination d'une configuration.

14. Dispositif selon la revendication précédente selon lequel ladite une desdites au moins deux configurations est relative à au moins une entité électronique portable de type mémoire.

15. Dispositif selon l'une quelconque des revendications 13 à 14 comprenant en outre des moyens de transmission d'une requête de type ré-énumération.
